# EUROPEAN PATENT SPECIFICATION

(11) **EP 3 772 428 B1**
(45) Date of publication and mention of the grant of the patent: **07.07.2021**
(21) Application number: 19190495.2
(22) Date of filing: 07.08.2019
(51) Int. Cl.: H01M 50/20, H01M 50/30

(54) **BATTERY PACK HOUSING PRODUCING AN ACOUSTIC WARNING SIGNAL IN CASE OF THERMAL RUNAWAY**
BATTERIEPACKGEHÄUSE MIT ERZEUGUNG EINES AKUSTISCHEN WARNSIGNALS BEI THERMISCHEM DURCHGEHEN
LOGEMENT DE BLOC-BATTERIE PRODUISANT UN SIGNAL D'AVERTISSEMENT ACOUSTIQUE EN CAS D'EMBALLEMENT THERMIQUE

(43) Date of publication of application: 10.02.2021
(73) Proprietor: Samsung SDI Co., Ltd., Gyeonggi-do 17084 (KR)
(72) Inventor: Haindl, Michael, 8230 Hartberg (AT)
(74) Representative: Gulde & Partner

(56) References cited:
- WO-A1-2011/101942
- CN-A- 104 505 482
- CN-A- 107 068 935
- CN-U- 207 274 442
- DE-A1-102013 209 210
- GB-A- 2 299 497
- JP-A- 2001 076 770
- US-A- 1 437 714

## Description

### Field of the Invention

The present invention relates to housing for a battery pack, the housing being capable of producing a warning signal when a dangerous situation such as a thermal event (in particular, a thermal runaway) occurs in the battery pack. The invention further relates to a battery pack comprising a housing being capable of producing a warning signal when a dangerous situation occurs. The invention is also dedicated to a vehicle equipped with one or more battery packs comprising a housing being capable of producing a warning signal when a dangerous situation occurs.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e. g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them. Battery packs may also comprise a housing that encloses the various individual battery modules.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers.

Battery systems usually comprise a battery management system (BMS) and/or battery management unit (BMU) for processing the aforementioned information. The BMS/BMU may communicate to the controllers of the various electrical consumers via a suitable communication bus, e. g. a SPI or CAN interface. The BMS/BMU may further communicate with each of the battery submodules, particularly with a cell supervision circuit (CSC) of each battery submodule. The CSC may be further connected to a cell connection and sensing unit of a battery submodule that interconnects the battery cells of the battery submodule.

Thus, the BMS/BMU is provided for managing the battery pack, such as by protecting the battery from operating outside its safe operating area, monitoring its state, calculating secondary data, reporting that data, controlling its environment, authenticating it and/or balancing it.

To provide thermal control of the battery pack, a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein. Then, not only the charging and discharging performance of the rechargeable may deteriorate and the life-span of the rechargeable battery may be shortened, but, in case of a serious battery failure, a so-called "thermal runaway" may occur, which may lead to the ejection of possible harmful substances from the inside of the affected battery cells (see below). Thus, a cell cooling system for effectively emitting/discharging/dissipating heat from the cells is advantageously installed for the battery pack or module(s).

In the event of a thermal runaway, the internal heat generation (per time unit) within a battery cell is higher than the heat loss (per time unit) such that, starting from the already high temperature of the battery cell in its normal operation state, the temperature inside the cell increases. The increased internal temperature leads to faster chemical reactions inside the cell, which in turn produces additional heat, wherein the additional heat then leads to still faster chemical reactions. This way, the internal temperature constantly increases up to a point in time, where the cell may be destroyed.

When a battery cell is heated above a critical temperature (typically above 150° C), it may transit into a thermal runaway. The initial heating may be caused by a local failure such as a cell internal short circuit, heating from a bad electrical contact, short circuit to a neighboring cell, or the like. Upon occurrence of a thermal runaway, the failed cell(s) may heat up to cell temperatures higher than 700° C. During the thermal runaway, large quantities of hot gas are ejected from inside of the failed cell(s) through the venting opening of the cell into the battery pack and from the battery pack to the outside of the car (vent-gas). Typically, the main components of vent-gas are H₂, CO₂, CO, electrolyte vapor and other hydrocarbons. Therefore, vent-gas is burnable and potentially toxic.

Battery electric vehicles (BEVs) or hybrid electric vehicles (HEV) may therefore be equipped with an emergency cooling system to cool the battery cells in response to a signal indicating detection of one or more conditions indicating possible thermal runaway within the battery cells or battery modules. Additionally, there may be provided security measurements for the passengers in case of serious problems with the battery pack, for example a warning means being operated in the vehicle's passenger compartment in case of a thermal runaway. The warning means may be configured for outputting audible warning indicators (lamps, diodes, and the like) and/or visible warning indicators (sounds).

According to a new China standard, it will be required to have a kind of warning signal in case of a thermal runaway of a single cell. To generate a warning signal by software (SW), it is necessary to reliably detect those kind of behavior. Upon detection of a thermal runaway, the software may then communicate to the vehicle via CAN communication that a thermal runaway is occurring. However, the detection of a thermal runaway by sensors is very difficult and often requires, in particular to ensure reliability of the warning system, the use of additional sensors. Additional sensors, however, are cost-intensive. Moreover, a reliable differentiation between normal behavior of a battery cell and a serious thermal event such as a thermal runaway needs to be ensured such that no warning signal appears without an error in the battery pack.

During a thermal event such as a thermal runaway of a battery cell, some high pressure and high temperature vent-gas is ejected out of the cell (see above). In a battery pack, this vent-gas is transport to the outside of the battery pack through a venting device. At the venting device, the vent-gas has a high speed.

However, due to the distance between battery cell and venting device, internal devices such as measurement devices located in the flow path of the vent-gas can be destroyed or at least damaged. Accordingly, there is a risk that warning signals cannot be sent in time, neither to the passengers, not to control systems of the battery pack and/or the vehicle such as the BMU/BMS or a central control unit (CCU) of the vehicle.

There is thus a need to provide a battery system / battery pack and/or a means for a battery system that allows to reliably generate a warning signal in case of a serious / abnormal situation. Specifically, there is a need for a robust warning system being indestructible by the high-temperature vent-gases ejected by one or more cells in case of a thermal runaway. There is also a need to minimize the risk of triggering false warnings. Eventually, there is a need to avoid the need of using additional sensors.

It is thus an object of the present invention to overcome or reduce at least some of the drawbacks of the prior art and to provide a battery system / battery pack and/or a means for a battery system that allows to reliably generate a warning signal in case of a serious / abnormal situation, in particular a thermal runaway, in the battery pack or of one battery cell comprised in the battery pack. Specifically, it is an object to provide a robust warning system that is indestructible by the high-temperature vent-gases ejected by one or more cells in case of a thermal runaway. Also, it is an object to minimize the risk of triggering a false warning. Eventually, it is an object to avoid the need of using additional sensors.

DE 10 2013 209 210 A1 describes a method for indicating a degassing of a battery cell, wherein the degassing of the battery cell is the removal of a gas from the battery cell and for the purpose of degassing the battery cell. A degassing system is provided, wherein in the case of degassing an acoustic signal by means of an acoustic signal generator is generated.

WO 2011/101942 A1 refers to a battery module comprising a cell group formed from a plurality of cells, and an ECU. A battery safety valve faces a facing member. A sound sensor is arranged between the facing member and the cell group, and is connected to a valve operation detection unit in the ECU. The valve operation detection unit detects if at least one battery safety valve in the cell group has been operated, on the basis of an output signal from the sound sensor. As a result, the operation of a plurality of battery safety valves can be detected with the provision of just one or a small number of sound sensors for a plurality of batteries. Thus, the operation of safety valves can be detected with sufficient accuracy, and without complicating or enlarging the system.

### Summary of Invention

One or more of the above-identified drawbacks of the prior art could be avoided or at least reduced by means of the present invention as disclosed by the independent claims. The basic idea of the present invention is to provide a concept for a warning system that uses the power of the vent-gas to generate a warning signal, and in particular an acoustic warn signal. By using the power of the vent-gas ejected from one or more affected battery cells in case of a thermal runaway to generate an acoustic warning signal, false warnings can be prevented and the need to employ additional sensors can be avoided. Embodiments of the present disclosure seek to solve at least one of the problems existing in the prior art to at least some extent.

In particular, one aspect of the present invention is directed to a housing for a battery pack for a vehicle. The housing comprises a venting device arranged in the housing. The venting device comprises a tube having an inlet in the housing and an outlet outside the housing. A plurality of whistles are arranged in the tube.

The whistles may be configured such that the volume of their sound in case of a serious situation in the battery pack, in particular in case of a thermal runaway, is perceptible inside the passenger compartment without any further means. In this case, the warning signal is provided to the passengers without the need of any electronics, and thus, the warning system is functioning also in case of complete electric power breakdown of the car, which may occur in the situation of a thermal runaway.

Various kinds of whistles are known in the prior art. Typically, a whistle generates a sound by an air flow or - more generally - by a gas flow conducted through a duct or wind tunnel. The gas flow hits an edge causing turbulences in the gas flow. The duct or parts of the duct act as resonator. The turbulences cause the gas in the resonator to oscillate, which is then perceptible as a sound. The sound is typically a piercing tone having a distinct fundamental frequency. Dependent on the structure of the whistle, the sound can be controlled. For example, the fundamental frequency can be controlled by the length of the resonator.

Typically, dependent on the dimensions of the duct and the edge for causing turbulences, the gas flow rate must amount to at least a minimum value (i. e., a threshold value for the gas flow rate) in order to cause the whistle to generate a sound.

As whistles per se are known, it is believed that a detailed description of the different types of whistles is not required to be described in the following, but can be taken from the literature instead.

Dependent on the gas flow rate through the whistles, the frequency spectrum (i. e., the fundamental frequency and the overtones) may change. For example, when increasing the gas flow rate, the fundamental frequency can abruptly rise to a higher frequency due to overblowing effects. The sound may also vary dependent on the composition/mixture of different gases present in the gas flow. In particular, the density of the gas or the composition/mixture of different gases present in the gas flow affects the frequency spectrum.

Thus, the sound of the whistles can be analyzed and conclusions on the velocity and/or the composition/mixture of gases streaming through the duct can be made. Therefore, the sound of the whistle can be recorded by a microphone, and the frequency spectrum of the sound can be analyzed, e. g., by employing Fourier analysis.

According to one embodiment of the housing according to the invention, the whistles are positioned in the tube such that they produce a sound when gas is flowing through the tube from the inlet to the outlet.

According to one embodiment, the whistles are configured to produce a sound in case of a gas flow rate equal to or exceeding a predefined threshold, and to remain silent in case of a gas flow rate below.

According to one embodiment, the whistles are configured to produce a sound having a predefined fundamental frequency.

According to one embodiment, the fundamental frequency is dependent on the gas flow rate.

According to one embodiment, the whistles are further configured to produce a sound having one or more overtones.

According to one embodiment, the amplitude of each of the one or more overtones is dependent on the gas flow rate.

According to one embodiment, the complete gas flowing through the tube is conducted through the whistle.

According to one embodiment, only a part of the gas flowing through the tube is conducted through the whistles.

In the tube, the whistles can be arranged in series or in parallel. Each of the whistles is configured to produce a sound having a different fundamental frequency compared to any one of the other whistles. Each of the whistles is further configured to produce a sound in case of a gas flow rate equal to or exceeding a predefined threshold being specific for that, and to remain silent in case of a gas flow rate below.

According to one embodiment, one or more further venting devices are arranged in the housing. Each of the one or more further venting devices comprising a tube having an inlet in the housing and an outlet outside the housing. In each of the further venting devices, an acoustic whistle is arranged in the tube of that venting device.

According to one embodiment, at least one microphone for detecting the sound of the whistles is arranged on the outside of the housing. Each of the at least one microphones is connected to the battery management unit (BMU) of the battery pack. The BMU is configured for receiving the signal of the at least one microphones, for analyzing the electric signal of the at least one microphones, and for evaluating, based on the analysis of the electric signal, whether or not a dangerous situation such as a thermal runaway occurs in the battery pack. Preferably, the BMU is further configured to initiate, upon evaluation of a dangerous situation, procedures to react on a dangerous situation.

As the electric signal of the microphone corresponds to the frequency spectrum of the whistles an analysis, e. g., a Fourier analysis, of the electric signal of the microphone allows to make conclusions on the velocity and/or the composition/mixture of gases streaming through the duct. Then, conclusions about the situation in the battery pack can be made, e. g., it can be estimated how many of the battery cells are affected by a thermal runaway. The analysis, e. g., a Fourier analysis, can be performed via a program installed on the BMU or in a CPU of the BMU.

A further aspect of the present invention is related to a battery pack comprising a plurality of battery cells and/or battery modules and the housing for a battery pack according to the invention or embodiments of the housing for a battery pack according to the invention as described above.

Yet a further aspect of the invention is related to a vehicle equipped with one or more battery packs according to the invention.

According to one embodiment of the vehicle according to the invention, the vehicle comprises a passenger compartment, a central control unit (CCU), and a warning means in the inside of the passenger compartment.

The warning means may be a lamp or diode that may be installed on the car's dashboard or at the ceiling of the passenger compartment. Alternatively or additionally, the warning means can be an acoustic warning signal from a loudspeaker being triggered in the car or an announcement being triggered in the car by the CCU.

The vehicle comprises a microphone configured for detecting the sound of the whistles of the battery pack(s), the microphone of the vehicle being connected to the CCU. The CCU is configured for receiving the signal of the microphone of the vehicle, for analyzing the electric signal of the microphone of the vehicle, and for evaluating, based on the analysis of the electric signal, whether or not a dangerous situation such as a thermal runaway occurs in the battery pack. The CCU is further configured to operate the warning means upon evaluation of a dangerous situation. In this case, the analysis, e. g., a Fourier analysis, of the acoustic frequency spectrums of the whistles are performed via a program installed on the CCU or in a CPU of the CCU.

Alternatively or additionally, the CCU is configured for receiving a signal of the BMU of each of the battery pack(s), the signal encoding information on a dangerous situation occurs in the respective battery pack. The CCU is further configured to operate the warning means upon receiving, from the BMU, the signal encoding information on a dangerous situation.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic cross section of the housing according to an example not covered by the claimed invention of the invention, the housing comprising a battery pack;
- Fig. 2: illustrates a schematic cross section of the venting device employed in the housing for a battery pack according to an example not covered by the claimed invention of the invention;
- Fig. 3: shows a schematic cross section of the housing according to an embodiment of the invention, the housing comprising a battery pack as well as three venting devices;
- Fig. 4: depicts a schematic cross section of the housing according to an embodiment of the invention, the housing comprising a battery pack and to microphones installed on the outer wall of the housing;
- Fig. 5: depicts a schematic cross section of the housing according to a further embodiment of the invention, the housing comprising a battery pack and to microphones installed on the outer wall of the housing, the microphones being connected to a central control unit (CCU) of the vehicle;
- Fig. 6: illustrates schematically a venting device having three whistles in series; and
- Fig. 7: depicts schematically a venting device with a discoid insert, wherein two different whistles are arranged on the insert.

### Detailed Description of the Invention

Reference will now be made in detail to examples and embodiments, which are illustrated in the accompanying drawings. Effects and features of the examples, embodiments, and implementation methods thereof will be described with reference to the accompanying drawings. Although the examples are useful for understanding the invention, they are not part of the claimed invention.

In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of examples and embodiments of the present invention, the terms of a singular form may include plural forms unless the context clearly indicates otherwise. It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

In the drawings, the sizes of elements may be exaggerated for clarity. For example, in the drawings, the size or thickness of each element may be arbitrarily shown for illustrative purposes, and thus the embodiments of the present invention should not be construed as being limited thereto.

Features of the inventive concept and methods of accomplishing the same may be understood more readily by reference to the following detailed description of embodiments and the accompanying drawings. Hereinafter, examples and embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The electronic or electric devices and/or any other relevant devices or components according to embodiments of the present invention described herein may be implemented utilizing any suitable hardware, firmware (e. g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the preset invention.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

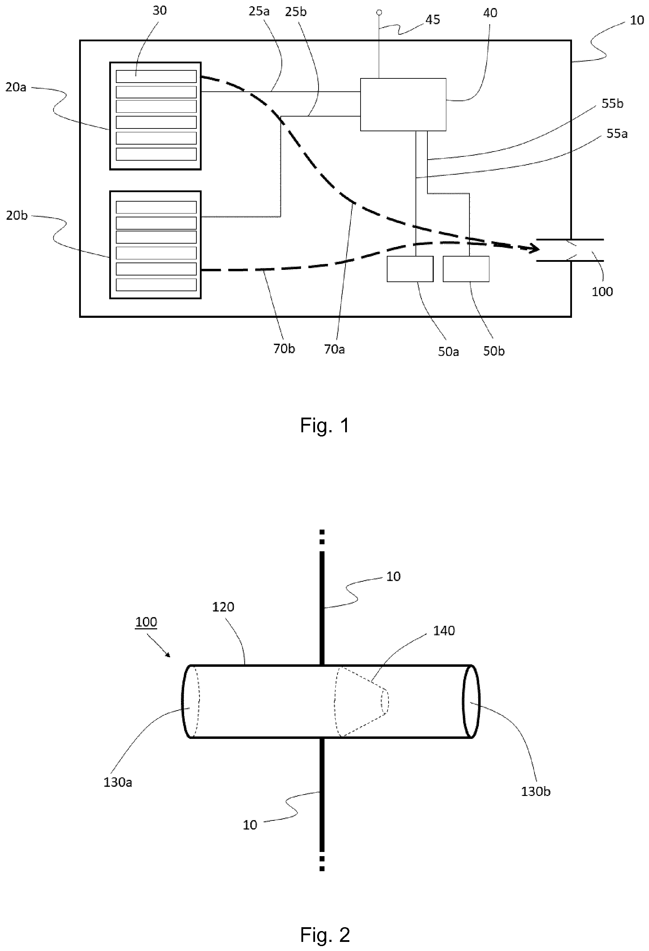

Fig. 1 is a schematic cross section (block diagram) of the housing 10 according to an example not covered by the claimed invention. In the depicted example, two battery modules 20a, 20b are accommodated within the housing 10. Each of the battery modules 20a, 20b comprises a plurality of battery cells 30. The battery modules 20a, 20b are controlled and monitored by and thus connected via cable-connections 25a, 25b with a battery management unit (BMU) 40. The BMU 40 may be in turn connected via a cable-connection 45 with a central control unit (CCU; not shown) of the vehicle (not shown). Further, measurement devices 50a, 50b are positioned in the housing 10 to measure various parameters inside the housing, e. g., the temperature or the pressure. The measurement devices 50a, 50b are connected to the BMU via cable-connections 55a, 55b.

A venting device 100 comprising a tube 120 (see also Fig. 2) is arranged in the wall of housing 10. The venting device 100 is arranged such in the wall of housing 10 that one opening 130a of the tube 120 is located inside the housing 10 and is acting as an inlet, whereas the opposite opening 130b of the tube 120 is located outside the housing 10 and is acting as an outlet.

Vent-gases may be generated in the battery modules 20a, 20b. The vent-gases flow along certain flow paths (depicted by dashed lines 70a, 70b) to the venting device 100, and then through the venting device 100 to the outside of the housing 10. Thereby, at least some of the measurement devices 50a, 50b and/or the BMU 40 may be located in or close to the flow paths 70a, 70b of the vent-gases.

In case of an abnormal state or serious malfunction of at least one of the battery cells 30, vent-gases of high temperature are ejected from the affected cells and would stream with a high velocity out of the battery modules 20a, 20b to the venting device. Due to the temperature, it cannot be excluded that at least some of the measurement devices 50a, 50b and/or the BMU 40 being located in or close to the flow paths 70a, 70b of the vent-gases will be damaged or even destroyed. They thus may also fail to generate an electronic warning signal and to send that warning signal to the CCU of the vehicle.

However, as shown in Fig. 2, the venting device 100 being arranged in the housing 10 according to an example not covered by the claimed invention comprises a tube 120 and in addition a whistle 140, through which the vent-gas is flowing. In this example, the whistle is realized as a truncated cone 140 arranged in the tube 120. Due to the truncated cone 140, the vent-gas streaming through the tube 120 would be swirled downstream the truncated cone 140, thereby starting to oscillate, which is then perceptible as a whistle-sound. Due to its high velocity in case of a thermal runaway, the vent-gas contains enough (kinetic) energy for producing a loud and piercing sound when flowing through the whistle 140 such that the sound is perceptible inside the passenger compartment of a vehicle, in which the battery pack with the housing 10 is installed. Thus, the sound acts as a warning signal for the driver and/or the passengers of the vehicle. Due to the whistle being a simple mechanical device, it is indestructible even by very hot, chemical aggressive, and/or fast streaming vent-gas. The tube 120 and/or the whistle 140 (in the example, the truncated cone 140) may be made of metal. However, also other materials being high-temperature-resistant (up to at least 700° C) may be used.

Hence, the requirements of the above-mentioned new China standard are met, when a housing for a battery pack according to the invention is employed, as it reliably generates an (acoustic) signal in the event of a thermal runaway.

However, the sound of the whistle can also be analyzed in order to automatically initiate emergency-procedures. Therefore, a microphone can be positioned such that it records the sound of the whistle. The analysis of the sound can then be performed by the BMU 40 of the battery pack and/or the CCU of the vehicle (not shown). The analysis of the sound can be done, e. g., by Fourier analysis or the like. Upon occurrence of certain (amplitudes of certain) frequencies, the emergency-procedures can be started automatically. For example, the vehicle can be automatically stopped, a cooling system and/or a fire-extinguishing system can be started. Also, warning signals (additionally to the acoustic sound generated by the whistle) can be triggered inside the passenger compartment of the vehicle.

If instead of only one whistle, various whistles are used that each start generating a sound at different gas flow rates and each produce a different sound, the analysis of the sound of all whistles can reveal at which velocity the vent-gas is streaming out of the housing and thus initiate different emergency-procedures depending on the velocity of the vent-gas. Thereby, it is assumed that the higher the velocity of the vent-gas streaming out if the housing, the more serious is the state of the battery pack. Instead of using different whistles, also the frequency spectrum of the sound of one whistle can be analyzed, if it is known for the specific whistle, how the spectrum changes with the velocity of the gas streaming through the whistle (e. g., some overtones may only occur at certain velocities of the gas).

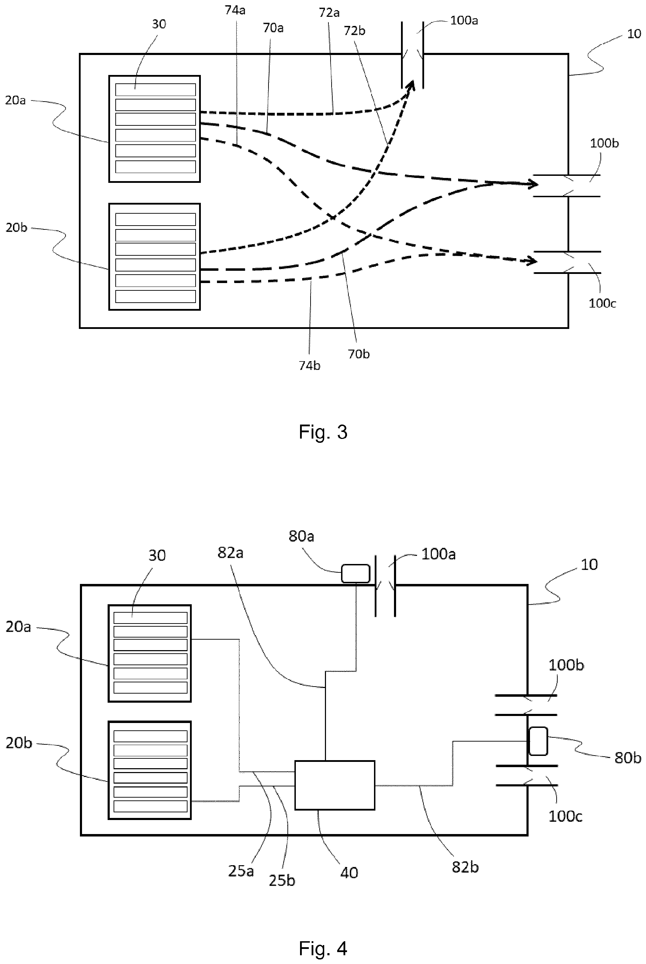

Fig. 3 shows an embodiment of the housing 10 according to invention that is, with regard to the inside components of the housing 10, identical to that of Fig. 1 (note that not all of the inside components are shown in Fig. 3 for the sake of clarity). However, in contrast to the embodiment shown in Fig. 1, wherein only one venting device 100 is installed in the wall of the housing 10, the embodiment of Fig. 3 employs three venting devices 100a, 100b, 100c. Two venting devices 100b and 100c are arranged through the same side-wall of the housing 10, a further venting device 100a is arranged in another side-wall of the housing 10.

The vent-gases produced at each of the battery modules 20a, 20b can be discharged via any one of the venting devices 100a, 100b, 100c. In particular, the vent-gases generated at the first battery module 20a and the second battery module 20b can be discharged via venting device 100a, as indicated by the dashed arrows 72a and 72b, respectively. Correspondingly, the vent-gases generated at the first battery module 20a and the second battery module 20b can be discharged via venting device 100b, as indicated by the dashed arrows 70a and 70b, respectively, and the vent-gases generated at the first battery module 20a and the second battery module 20b can also be discharged via venting device 100c, as indicated by the dashed arrows 74a and 74b, respectively.

The venting devices 100a, 100b, 100c may be formed and equipped identically. Then, for example, they may generate a sound having a similar frequency, when they are streamed through by the same flow rate of vent-gas and may also have the same threshold for producing a sound, i. e., an identical minimum flow rate of vent-gas is required to flow through the venting device in order to generate a sound. Alternatively, the venting devices 100a, 100b, 100c may be formed and/or equipped differently. For example, the threshold (required minimum flow rate) may be different and/or the frequency (or frequency structure) of the sounds may be different. In the latter case, the sound can serve as an indicator of the amount of vent-gas produced inside the housing 10 per time, such that, depending thereon, different levels of danger or perilousness can be recognized.

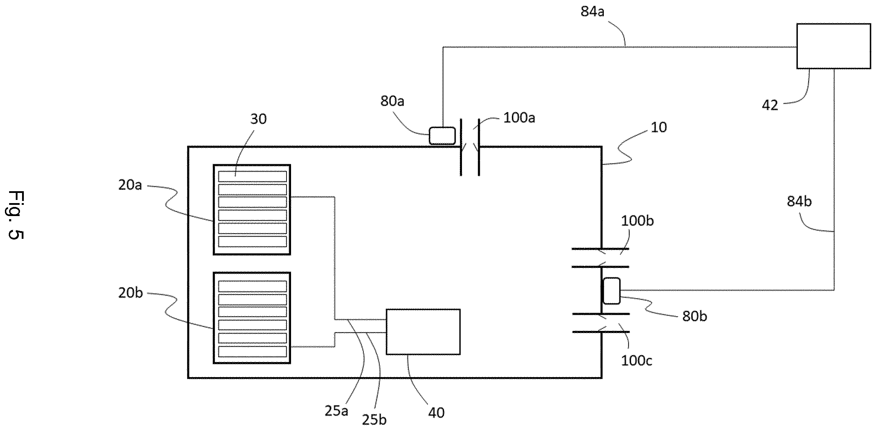

Figs. 4 and 5 show each an embodiment of the housing 10 for a battery pack according to the invention having, similar to the embodiment of Fig. 3, three venting devices arranged in the housing walls. Next to the first venting device 100a, a first microphone 80a is mounted on the outer side of the housing wall. A second microphone 80b is installed on the outer wall of the housing between the second venting device 100b and the third venting device 100c. Thus, the first microphone is located suitable to record any sound generated by the first venting device 100a, and the second microphone 80b is positioned appropriately to receive the sound produced by the second venting device 100b and the third venting device 100c.

In the embodiment as shown in Fig. 4, each of the first and second microphones 80a, 80b is connected, via a cable-connection 82a, 82b, to the battery management unit 40 (BMU) inside the housing. In this embodiment, the BMU 40 is configured for receiving the signals of the microphones 80a, 80b and to evaluate these signals. During the evaluation of the microphone signals, it is permanently supervised, whether or not a sound recorded by one or both of the microphones 80a, 80b indicates an increased discharge of vent-gas and may thus be interpreted as being indicative of a thermal event. In the latter case, the BMU 40 may then transmit a corresponding warning signal to the central control unit of the vehicle (not shown). Alternatively, according to the embodiment as shown in Fig. 5, each of the first and second microphones 80a, 80b is connectable, via a cable-connection 84a, 84b, to the vehicle's central control unit 42 (CCU). Fig. 5 shows the embodiment in a state wherein the microphones 80a, 80b are connected to the CCU 42. The CCU 42 is not part of the housing 10 for a battery pack. Also, the cable-connections 84a, 84b are typically not part of the housing 10. In this embodiment, the CCU 42 is configured for receiving the signals of the microphones 80a, 80b and to evaluate these signals. During the evaluation of the microphone signals, it is permanently supervised, whether or not a sound recorded by one or both of the microphones 80a, 80b indicates an increased discharge of vent-gas and may thus be interpreted as being indicative of a thermal event. The embodiment of Fig. 5 has the advantage that even in case that the interior components of the housing 10 (in particular the BMU 40) are / get destroyed or damaged by vent-gas upon occurrence of a thermal event, the sound of the microphones 80a, 80b can still be supervised and evaluated by the CCU 42 being external to the housing 10.

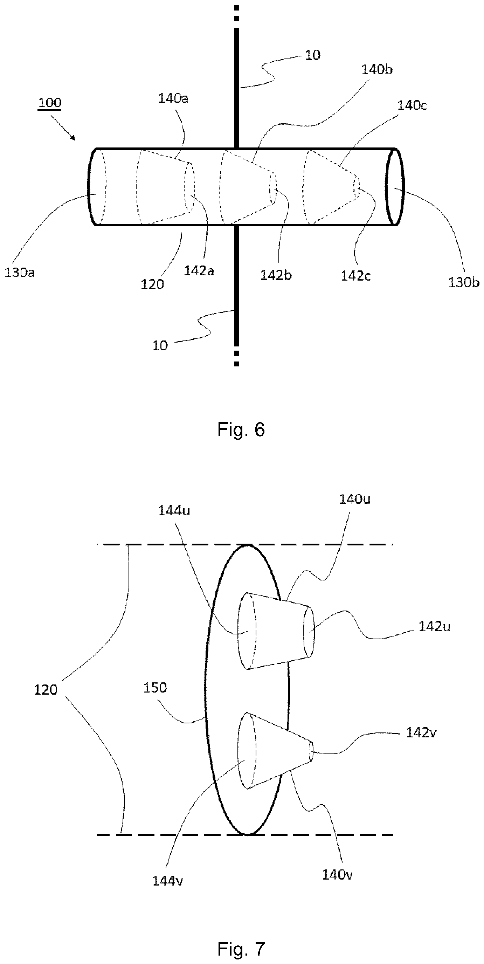

Figs. 6 and 7 illustrate schematically two embodiments of venting devices that may be used in the housing 10 for a battery pack according to the invention. The venting device as shown in Fig. 6 corresponds essentially to the venting device as depicted in Fig. 2 and described above. However, in contrast to the latter, the venting device of Fig. 6 comprises three whistles 140a, 140b, 140c arranged in series within the tube 120 of the venting device. Each of the whistles has a different threshold regarding the flow rate, i. e., each of the whistles 140a, 140b, 140c requires a different minimum flow rate of gas streaming through the tube 120 in order to generate a sound. Also, each of the whistles 140a, 140b, 140c produces a sound having a different frequency (or frequency spectrum) in comparison to the other whistles in the tube 120. This is indicated here by the different sizes (diameters) of the openings 142a, 142b, 142c of the whistles 140a, 140b, 140c, respectively. For example, the third whistle 140a may be the first whistle in the direction of flow in the venting device. The first whistle 140a may have the lowermost threshold as to the flow rate in comparison to the remaining whistles 140b and 140c such that there exists a certain range of flow rates for the vent-gas (viz. flow rates exceeding the threshold of the first whistle 140a, but below the thresholds of the other whistles 140b and 140c), where only the first whistle 140a generates a sound, but the remaining whistles 140b and 140c remain silent.

Further, the second whistle 140b may have a threshold lower than that of the third whistle 140c, but higher than that of first whistle 140a. Accordingly, there exists a certain range of flow rates for the vent-gas (viz. flow rates exceeding the threshold of the second whistle 140b, but below the threshold of the third whistle 140c), where both, the first whistle 140a as well as the second whistle 140b generate a sound, but the third whistle 140c remains silent.

Eventually, for flow rates exceeding the threshold of the third whistle 140c, each of the whistles 140a, 140b, 140c generates a sound. The whistles produce each a sound having an individual and thus characteristic frequency or frequency spectrum. For example, the first whistle 140a may generate a sound having the deepest (fundamental) frequency compared to the second and third whistle, the third whistle 140c may produce a sound having the highest (fundamental) frequency, and the second whistle 140b may generate a sound having a (fundamental) frequency between the (fundamental) frequencies of the first and third whistle. This allows for a stepwise estimation of the velocity of the vent-gas streaming through the tube 120 of the venting device. No sound may indicate that there is no flow rate of vent-gas at all or that the flow rate is within a normal and safe range. As the flow rate through the venting device increases, there will be reached a flow rate where the first whistle 140a starts producing a sound. The characteristic frequency (spectrum) of the first whistle 140a then indicates (to a person in the passenger compartment of the vehicle or to an electronic evaluation system connected to a microphone recording the sound; see above) that the flow rate slightly exceeds the normal range.

When the flow rate of the vent-gas streaming through the tube 120 further increases, the second whistle 140b starts producing a sound (together with the first whistle 140a), which may indicate to persons in the passenger compartment that the vehicle should be stopped upon the next suitable occasion, but that it is still safe in the vehicle and that, e. g., there is time to safely find a parking place or the like.

When, however, the flow exceeds such that also the third whistle 140c starts generating a sound, this may indicate that the battery system of the vehicle is in a situation being that dangerous such that the vehicle should be immediately stopped, irrespective of the situation, and that each of the passengers should immediately leave the vehicle.

It is to be understood that the use of three whistles in series in a venting device as described above and shown in Fig. 6 is only one example for using several whistles to estimate different levels of danger. Of course, only two whistles may be used to evaluate different levels of danger. Also, four, five, six, or more whistles may be used to evaluate different levels of danger.

The purpose of the example of the venting device shown in Fig. 7 is similar to that described in the context of Fig. 6. However, instead of installing two or more whistles in series within tube 120 of the venting device, the two or more whistles are arranged in parallel in tube 120 (tube 120 being only indicated by the dashed lines in Fig. 7) according to the example of Fig. 7. To that end, a disk or discoid insert 150 is installed within the tube 120 of the venting device. The insert 150 comprises a plurality of openings 144u, 144v, which are at the same time the inlets of respective whistles 140u, 144v. Each of the whistles 140u, 140v is arranged directly behind (i. e., in the direction of flow) of one of said openings 144u, 144v. Accordingly, the flow of the vent-gas is forced to stream through the whistles 140u, 140v. A bypass (not shown) may be also be realized as a simple hole in the insert 150 to decrease the resistance exerted by the insert 150 against the flow of vent-gas.

Each of the whistles 140u, 140v installed on the insert 150 may be capable to produce an individual characteristic sound (i. e., an individual frequency spectrum; this may be realized by the different size of outlets 142u, 142v of whistles 140u, 140v, respectively) such that also the example shown in Fig. 7 allows for an estimation of the velocity / the flow rate, with which a vent-gas is streaming through the venting device. Also, the threshold (i. e., the minimum flow rate for the whistle to produce a sound; see above) may be different for each of the whistles 140u, 140v.

It is to say that, due to the insert 150, the overall resistance of the whistle assembly in the example of Fig. 7 may be larger than that of the assembly as shown in Fig. 6. This results in an increased flow rate through the openings 144u, 144v in the insert 150 and, accordingly, through the whistles 140u, 140v compared to the flow rates through the whistles 140a, 140b, 140c in the example of Fig. 6. Also, the whistles 140u, 140v in the example of Fig. 7 may be smaller in comparison to the whistles in the example of Fig. 6. This may result in a sharper or more piercing sound produced with the venting device of Fig. 7 compared to the venting device of Fig. 6.

It is to be understood that the use of two whistles in parallel in a venting device as described above and shown in Fig. 7 is only one example for using several whistles to estimate different levels of danger. Of course, more whistles, e. g., three, four, five, or six whistles may be used to evaluate different levels of danger.

A vent-gas typically comprises several components such as H₂, CO₂, CO, and the like (see above). Different ratios of these components in the vent-gas may lead to different densities of the vent-gas. The density of a vent-gas streaming through the venting device and, accordingly, through the one or more whistles installed therein, may, in turn, affect the frequency spectrum of the sound produced by the one or more whistles. Accordingly, if the sound of the one or more whistles is recorded by at least one microphone and subsequently analyzed, e. g., in the BMU 40 or the CCU 42, conclusions on the chemical composition of the vent-gas streaming through a venting device may be obtained. These conclusions may, in turn, be helpful to determine the situation within the housing 10 and to decide about the level of danger.

### Reference signs

- 10: housing for a battery pack
- 20a, 20b: battery module
- 25a, 25b: cable-connections between battery module and BMU
- 30: battery cells
- 40: battery management unit (BMU)
- 42: central control unit (CCU) of a vehicle
- 45: cable-connection of BMU to external devices
- 50a, 50b: measurement device
- 55a, 55b: cable-connections between measurement device and BMU
- 70a, 70b: indication of flow paths of vent-gas
- 72a, 72b: indication of further flows of vent-gas
- 74a, 74b: indication of still further flows of vent-gas
- 80a, 80b: microphones
- 82a, 82b: cable-connections between microphone and BMU
- 84a, 84b: cable-connections between microphone and CCU

- 100: venting device
- 100a, 100b, 100c: venting devices
- 120: tube
- 130a: inlet
- 130b: outlet
- 140: whistle, realized as a truncated cone
- 140a, 140b, 140c: whistles, each being realized as a truncated cone
- 140u, 140v: whistles, each being realized as a truncated cone
- 142a, 142b, 142c: outlets of whistles 140a - c
- 142u, 142v: outlets of whistles 140u, v
- 144u, 144v: inlets of whistles 140u, v
- 150: discoid insert

## Claims

1. A housing (10) for a battery pack, comprising:
a venting device (100, 100a) arranged in the housing;
wherein the venting device comprises a tube (120) having an inlet (130a) in the housing and an outlet (130b) outside the housing; and
**characterized in that**
the housing (10) for a battery pack further comprises;
a plurality of acoustic whistles (140a, 140b, 140c, 140u, 140v) arranged in the tube;
wherein the whistles (140a, 140b, 140c, 140u, 140v) are each configured to produce a sound in case of a gas flow rate equal to or exceeding a predefined threshold, and to remain silent in case of a gas flow rate below;
wherein each of the whistles (140a, 140b, 140c, 140u, 140v) is configured to produce a sound having a different fundamental frequency compared to any one of the other whistles;
wherein each of the whistles is further configured to produce a sound in case of a gas flow rate equal to or exceeding a predefined threshold being specific for that whistle, and to remain silent in case of a gas flow rate below.

2. The housing (10) according to claim 1, wherein each of the whistles (140, 140a, 140b, 140c, 140u, 140v) is positioned in the tube (120) such that it produces a sound when gas is flowing through the tube from the inlet (130a) to the outlet (130b).

3. The housing (10) according to any one of claims 1 to 2, wherein each of the whistles (140, 140a, 140u) is configured to produce a sound having a predefined fundamental frequency.

4. The housing (10) according to claim 3, wherein, for each of the whistles, the fundamental frequency is dependent on the gas flow rate.

5. The housing (10) according to claim 3 or 4, wherein each of the whistles (140, 140a, 140b, 140c, 140u, 150v) is further configured to produce a sound having one or more overtones.

6. The housing (10) according to claim 5, wherein, for each of the whistles, the amplitude of each of the one or more overtones is dependent on the gas flow rate.

7. The housing (10) according to any one of claims 1 to 6, wherein the complete gas flowing through the tube (120) is conducted through each of the whistles (140a, 140b, 140c).

8. The housing (10) according to any one of claims 1 to 6, wherein only a part of the gas flowing through the tube (120) is conducted through each of the whistles (140u, 140v).

9. The housing (10) according to any one of claims 1 to 8, wherein one or more further venting devices (100b, 100c) are arranged in the housing, each of the one or more further venting devices comprising a tube having an inlet in the housing and an outlet outside the housing; and
wherein for each of the further venting devices, an acoustic whistle is arranged in the tube of that venting device.

10. A battery pack, comprising the housing system according to any one of claims 1 to 9 and a plurality of battery cells and/or battery modules (20a, 20b).

11. The battery pack according to claim 10 further comprising:
at least one microphone (80a, 80b) for detecting the sound of the whistles, and
a battery management unit, BMU (40),
wherein the at least one microphone (80a, 80b) is arranged on the outer wall of the housing;
wherein each of the at least one microphones (80a, 80b) is connected to the battery management unit, BMU (40);
wherein the BMU (40) is configured for receiving the signal of the at least one microphones (80a, 80b), for analyzing the electric signal of the at least one microphones, and for evaluating, based on the analysis of the electric signal, whether or not a dangerous situation such as a thermal runaway occurs in the battery pack; and
wherein preferably the BMU (40) is further configured to initiate, upon evaluation of a dangerous situation, procedures to react on a dangerous situation.

12. A vehicle equipped with one or more battery packs according to claim 10, or 11

13. The vehicle according to claim 12 with one or more battery packs according to claim 10, wherein the vehicle comprises a passenger compartment, a central control unit, CCU (42), and a warning means in the inside of the passenger compartment;
wherein the vehicle comprises at least one microphone (80a, 80b) configured for detecting the sound of the whistles of one or more battery packs, the microphone of the vehicle being connected to the CCU; wherein the CCU is configured for receiving the signal of the microphone of the vehicle, for analyzing the electric signal of the microphone of the vehicle, and for evaluating, based on the analysis of the electric signal, whether or not a dangerous situation such as a thermal runaway occurs in the battery pack; wherein the CCU is further configured to operate the warning means upon evaluation of a dangerous situation.

14. A vehicle equipped with one or more battery packs according to claim 11, wherein the vehicle comprises a passenger compartment, a central control unit, CCU (42), and a warning means in the inside of the passenger compartment;
wherein the CCU (42) is configured for receiving a signal of the BMU (40) of each of the battery packs, the signal encoding information on a dangerous situation occurs in the respective battery pack; wherein the CCU (42) is further configured to operate the warning means upon receiving, from the BMU (40), the signal encoding information on a dangerous situation.

## Patentansprüche

1. Gehäuse (10) für ein Batteriepack, umfassend:
Entlüftungsvorrichtung (100, 100a), die im Gehäuse angeordnet ist;
wobei die Entlüftungsvorrichtung ein Rohr (120) mit einem Einlass (130a) im Gehäuse und einem Auslass (130b) außerhalb des Gehäuses umfasst; und
**dadurch gekennzeichnet, dass** das Gehäuse (10) für ein Batteriepack ferner umfasst:
mehrere akustische Pfeifen (140a, 140b, 140c, 140u, 140v), die in dem Rohr angeordnet sind;
wobei die Pfeifen (140a, 140b, 140c, 140u, 140v) jeweils so konfiguriert sind, dass sie im Falle einer Gasströmungsrate, die gleich einem vordefinierten Schwellenwert ist oder diesen übersteigt, einen Ton erzeugen und im Falle einer Gasströmungsrate, die darunter liegt, still bleiben;
wobei jede der Pfeifen (140a, 140b, 140c, 140u, 140v) so konfiguriert ist, dass sie einen Ton mit einer anderen Grundfrequenz im Vergleich zu einer der anderen Pfeifen erzeugt;
wobei jede der Pfeifen ferner so konfiguriert ist, dass sie im Falle einer Gasströmungsrate, die gleich oder größer als ein vordefinierter Schwellenwert ist, der für diese Pfeife spezifisch ist, einen Ton erzeugt, und dass sie im Falle einer Gasströmungsrate, die darunter liegt, still bleibt.

2. Gehäuse (10) nach Anspruch 1, wobei jede der Pfeifen (140, 140a, 140b, 140c, 140u, 140v) in dem Rohr (120) so positioniert ist, dass sie einen Ton erzeugt, wenn Gas durch das Rohr vom Einlass (130a) zum Auslass (130b) strömt.

3. Gehäuse (10) nach einem der Ansprüche 1 bis 2, wobei jede der Pfeifen (140, 140a, 140u) so konfiguriert ist, dass sie einen Ton mit einer vordefinierten Grundfrequenz erzeugt.

4. Gehäuse (10) nach Anspruch 3, wobei für jede der Pfeifen die Grundfrequenz von der Gasströmungsrate abhängig ist.

5. Gehäuse (10) nach Anspruch 3 oder 4, wobei jede der Pfeifen (140, 140a, 140b, 140c, 140u, 150v) ferner so konfiguriert ist, dass sie einen Ton mit einem oder mehreren Obertönen erzeugt.

6. Gehäuse (10) nach Anspruch 5, wobei für jede der Pfeifen die Amplitude jedes der ein oder mehreren Obertöne von der Gasströmungsrate abhängig ist.

7. Gehäuse (10) nach einem der Ansprüche 1 bis 6, wobei das gesamte durch das Rohr (120) strömende Gas durch jede der Pfeifen (140a, 140b, 140c) geleitet wird.

8. Gehäuse (10) nach einem der Ansprüche 1 bis 6, wobei nur ein Teil des durch das Rohr (120) strömenden Gases durch jede der Pfeifen (140u, 140v) geleitet wird.

9. Gehäuse (10) nach einem der Ansprüche 1 bis 8,
wobei eine oder mehrere weitere Entlüftungsvorrichtungen (100b, 100c) in dem Gehäuse angeordnet sind, wobei jede der einen oder mehreren weiteren Entlüftungsvorrichtungen ein Rohr mit einem Einlass in dem Gehäuse und einem Auslass außerhalb des Gehäuses umfasst; und
wobei für jede der weiteren Entlüftungsvorrichtungen eine akustische Pfeife in dem Rohr dieser Entlüftungsvorrichtung angeordnet ist.

10. Batteriepack, umfassend das Gehäusesystem nach einem der Ansprüche 1 bis 9 und mehrere Batteriezellen und/oder Batteriemodule (20a, 20b).

11. Batteriepack nach Anspruch 10, ferner umfassend:
mindestens ein Mikrofon (80a, 80b) zum Erfassen des Tons der Pfeifen und eine Batteriemanagementeinheit, BMU (40),
wobei das mindestens eine Mikrofon (80a, 80b) an der Außenwand des Gehäuses angeordnet ist;
wobei jedes der mindestens einen Mikrofone (80a, 80b) mit der Batteriemanagementeinheit, BMU (40), verbunden ist;
wobei die BMU (40) zum Empfangen des Signals des mindestens einen Mikrofons (80a, 80b), zum Analysieren des elektrischen Signals des mindestens einen Mikrofons und zum Auswerten, basierend auf der Analyse des elektrischen Signals, ob eine gefährliche Situation, wie etwa eine thermische Instabilität, im Batteriepack auftritt oder nicht, konfiguriert ist; und
wobei vorzugsweise die BMU (40) ferner konfiguriert ist, um bei Auswertung einer Gefahrensituation Prozeduren zum Reagieren auf eine Gefahrensituation einzuleiten.

12. Fahrzeug, das mit einem oder mehreren Batteriepacks nach Anspruch 10 oder 11 ausgestattet ist.

13. Fahrzeug nach Anspruch 12 mit einem oder mehreren Batteriepacks nach Anspruch 10, wobei das Fahrzeug einen Fahrgastraum, eine zentrale Steuereinheit, CCU (42), und eine Warnvorrichtung im Inneren des Fahrgastraums umfasst;
wobei das Fahrzeug mindestens ein Mikrofon (80a, 80b) umfasst, das zum Erfassen des Tons der Pfeifen eines oder mehrerer Batteriepacks konfiguriert ist, wobei das Mikrofon des Fahrzeugs mit der CCU verbunden ist; wobei die CCU zum Empfangen des Signals des Mikrofons des Fahrzeugs, zum Analysieren des elektrischen Signals des Mikrofons des Fahrzeugs und zum Auswerten, basierend auf der Analyse des elektrischen Signals, ob eine gefährliche Situation, wie etwa eine thermische Instabilität, in dem Batteriepack auftritt oder nicht, konfiguriert ist; wobei die CCU ferner konfiguriert ist, um die Warnvorrichtung bei der Auswertung einer gefährlichen Situation zu betreiben.

14. Fahrzeug, das mit einem oder mehreren Batteriepacks nach Anspruch 11 ausgestattet ist, wobei das Fahrzeug einen Fahrgastraum, eine zentrale Steuereinheit, CCU (42), und eine Warnvorrichtung im Inneren des Fahrgastraums umfasst;
wobei die CCU (42) so konfiguriert ist, dass sie ein Signal der BMU (40) jedes der Batteriepacks empfängt, wobei das Signal Informationen über eine gefährliche Situation kodiert, die in dem jeweiligen Batteriepack auftritt; wobei die CCU (42) ferner so konfiguriert ist, dass sie die Warnvorrichtung beim Empfangen des Signals, das Informationen über eine gefährliche Situation kodiert, von der BMU (40) betätigt.

## Revendications

1. Boîtier (10) pour un bloc-batterie, comprenant :
un dispositif de mise à l'atmosphère (100, 100a) agencé dans le boîtier ;
dans lequel le dispositif de mise à l'atmosphère comprend un tube (120) ayant une entrée (130a) dans le boîtier et une sortie (130b) à l'extérieur du boîtier ; et
le boîtier (10) pour un bloc-batterie étant **caractérisé en ce qu'**il comprend en outre :
une pluralité de sifflets (140a, 140b, 140c, 140u, 140v) acoustiques agencés dans le tube ;
dans lequel les sifflets (140a, 140b, 140c, 140u, 140v) sont chacun configurés pour produire un son en cas de débit de gaz égal ou supérieur à un seuil prédéfini, et pour rester silencieux en cas de débit de gaz inférieur ;
dans lequel chacun des sifflets (140a, 140b, 140c, 140u, 140v) est configuré pour produire un son ayant une fréquence fondamentale différente de l'un quelconque des autres sifflets ;
dans lequel chacun des sifflets est en outre configuré pour produire un son en cas de débit de gaz égal ou supérieur à un seuil prédéfini qui est spécifique à ce sifflet, et pour rester silencieux en cas de débit de gaz inférieur.

2. Boîtier (10) selon la revendication 1, dans lequel chacun des sifflets (140, 140a, 140b, 140c, 140u, 140v) est positionné dans le tube (120) de sorte à produire un son lorsque du gaz circule dans le tube, de l'entrée (130a) à la sortie (130b).

3. Boîtier (10) selon l'une quelconque des revendications 1 et 2, dans lequel chacun des sifflets (140, 140a, 140u) est configuré pour produire un son ayant une fréquence fondamentale prédéfinie.

4. Boîtier (10) selon la revendication 3, dans lequel, pour chacun des sifflets, la fréquence fondamentale est fonction du débit de gaz.

5. Boîtier (10) selon la revendication 3 ou 4, dans lequel chacun des sifflets (140, 140a, 140b, 140c, 140u, 150v) est en outre configuré pour produire un son ayant une ou plusieurs harmoniques.

6. Boîtier (10) selon la revendication 5, dans lequel, pour chacun des sifflets, l'amplitude de chacune des une ou plusieurs harmoniques est fonction du débit de gaz.

7. Boîtier (10) selon l'une quelconque des revendications 1 à 6, dans lequel l'ensemble du gaz circulant dans le tube (120) est conduit à travers chacun des sifflets (140a, 140b, 140c).

8. Boîtier (10) selon l'une quelconque des revendications 1 à 6, dans lequel seule une partie du gaz circulant dans le tube (120) est conduite à travers chacun des sifflets (140u, 140v).

9. Boîtier (10) selon l'une quelconque des revendications 1 à 8,
dans lequel un ou plusieurs autres dispositifs de mise à l'atmosphère (100b, 100c) sont agencés dans le boîtier, chacun des un ou plusieurs autres dispositifs de mise à l'atmosphère comprenant un tube ayant une entrée dans le boîtier et une sortie à l'extérieur du boîtier ; et
dans lequel, pour chacun des autres dispositifs de mise à l'atmosphère, un sifflet acoustique est agencé dans le tube de ce dispositif de mise à l'atmosphère.

10. Bloc-batterie, comprenant le système de boîtier selon l'une quelconque des revendications 1 à 9 et une pluralité d'éléments de batterie et/ou modules de batterie (20a, 20b).

11. Bloc-batterie selon la revendication 10, comprenant en outre :
au moins un microphone (80a, 80b) pour détecter le son des sifflets, et
une unité de gestion de batterie, BMU, (40),
dans lequel l'au moins un microphone (80a, 80b) est agencé sur la paroi extérieure du boîtier ;
dans lequel chacun de l'au moins un microphone (80a, 80b) est connecté à l'unité de gestion de batterie, BMU (40) ;
dans lequel la BMU (40) est configurée pour recevoir le signal de l'au moins un microphone (80a, 80b), pour analyser le signal électrique de l'au moins un microphone, et pour évaluer, sur la base de l'analyse du signal électrique, si une situation dangereuse, telle qu'un emballement thermique, se produit ou non dans le bloc-batterie ; et
dans lequel, de préférence, la BMU (40) est en outre configurée pour initier, lors de l'évaluation d'une situation dangereuse, des procédures pour réagir à une situation dangereuse.

12. Véhicule équipé d'un ou plusieurs blocs-batterie selon la revendication 10 ou 11.

13. Véhicule selon la revendication 12 avec un ou plusieurs blocs-batterie selon la revendication 10, où le véhicule comprend un habitacle, une unité de commande centrale, CCU (42), et un moyen d'avertissement à l'intérieur de l'habitacle ;
où le véhicule comprend au moins un microphone (80a, 80b) configuréspour détecter le son des sifflets d'un ou plusieurs blocs-batterie, le microphone du véhicule étant connecté à la CCU ; où la CCU est configurée pour recevoir le signal du microphone du véhicule, pour analyser le signal électrique du microphone du véhicule, et pour évaluer, sur la base de l'analyse du signal électrique, si une situation dangereuse, telle qu'un emballement thermique, se produit ou non dans le bloc-batterie ; où la CCU est en outre configurée pour actionner le moyen d'avertissement lors de l'évaluation d'une situation dangereuse.

14. Véhicule équipé d'un ou plusieurs blocs-batterie selon la revendication 11, où le véhicule comprend un habitacle, une unité de commande centrale, CCU (42), et un moyen d'avertissement à l'intérieur de l'habitacle ;
dans lequel la CCU (42) est configurée pour recevoir un signal de la BMU (40) de chacun des blocs-batterie, le signal codant des informations sur une situation dangereuse se produisant dans le bloc-batterie respectif ; dans lequel la CCU (42) est en outre configurée pour actionner le moyen d'avertissement lors de la réception, à partir de la BMU (40), du signal codant des informations sur une situation dangereuse.
